Europäisches Patentamt

**European Patent Office**

**Office européen des brevets**

(19)

(11) Numéro de publication: **0 237 453**
**A2**

(12)

# DEMANDE DE BREVET EUROPEEN

(21) Numéro de dépôt: **87430005.6**

(22) Date de dépôt: **18.02.87**

(51) Int. Cl.³: **A 01 M 1/08**

(30) Priorité: **18.02.86 FR 8602140**

(43) Date de publication de la demande:
**16.09.87 Bulletin 87/38**

(84) Etats contractants désignés:
**AT BE CH DE ES FR GB GR IT LI LU NL SE**

(71) Demandeur: **Arizzi, Ennio**
**6, rue des Erables**
**F-78150 Rocquencourt Le Chesnay(FR)**

(72) Inventeur: **Arizzi, Ennio**
**6, rue des Erables**
**F-78150 Rocquencourt Le Chesnay(FR)**

(74) Mandataire: **de Boisse, Louis et al,**
**CABINET DE BOISSE 37, Avenue Franklin D. Roosevelt**
**F-75008 Paris(FR)**

(54) **Exterminateur d'insectes volants.**

(57) Un exterminateur compact d'insectes volants comporte une source lumineuse spécifique pour attirer les insectes, des moyens d'aspiration pour les capturer, et un réceptacle pour les y stocker. Les moyens d'aspiration comportent un tunnel d'aspiration formé par un premier carénage (3) circulaire, un tunnel de dépression formé par un second carénage (13) circulaire ouvert sur une partie (31) de sa circonférence et un moteur entrainant une hélie à double effet (5) de diamètre légèrement inférieur au diamètre intérieur du premier carénage (3). Le moyeu de l'hélice porte une ogive réfléchissante (9) et trois rateaux (8) pour balayer, en rotation, la surface totale du grillage (4) appliqué sur la face postérieure du second carénage (13).

La source lumineuse est constituée par un tube fluorescent (10) circulaire du type actinique ou par toute autre source de lumière en forme de couronne propre à attirer les insectes volants, et est disposée sur la face antérieure du premier carénage (3). Lorsque l'hélice (5) tourne, un clapet (12) met en commutation le second carénage (13) et le réceptacle est constitué par un tiroir (2) au fond (21) grillagé.

Fig. 1

EP 0 237 453 A2

La présente invention a pour objet un exterminateur compact d'insectes volants.

On a souvent mis à profit le puissant pouvoir d'attraction que la lumière exerce sur les insectes pour concevoir et fabriquer les dispositifs insecticides. La plupart des appareils actuellement sur le marché fonctionnent à partir de ce principe et comportent essentiellement une source lumineuse spéciale pour attirer les insectes et une grille électrique à haute tension (5000v) pour les électrocuter.

Les inconvénients dus à ce mode de fonctionnement sont très nombreux et notamment :

- Danger d'électrocution pour l'homme, malgré un faible ampérage, qui rend l'emploi et l'installation de ces appareils dépendants de réglementations internationales parfois draconiennes.

- Bruit important et désagréable consécutif à l'électrocution des insectes.

- Danger d'incendie représenté par l'étincelle électrique au moment de l'électrocution de l'insecte sur la grille.

- Odeur désagréable de crémation des insectes qui restent collés sur la grille, qui l'encrassent et qui la rendent progressivement isolante et par le fait inopérante.

- Dispersion des insectes après électrocution partielle avec tous les dangers conséquents de développement de germes pathogènes dont on devine les conséquences facheuses pour la santé.

- Encombrement important pour les appareils efficaces.

Pour pallier tout ou parties ces inconvénients, on a pensé à capturer les insectes à l'aide d'un appareil muni d'un aspirateur, dans lequel l'air brassé par l'aspirateur est refoulé en totalité par des conduits et des clapets dans un réceptacle comportant des

0237453

orifices grillagés où sont chassés les insectes aspirés et où ces derniers sont détruits par dessiccation.

Avec les appareils construits sur ce principe, les pertes de charges importantes se produisant, en fonctionnement, dans le circuit d'air ont rendu nécessaires des moteurs d'aspirateurs de puissance relativement élevée, ce qui a eu pour conséquence de rendre les dits appareils bruyants, couteux, encombrants et gros consommateurs d'énergie électrique. Il a fallu en outre les équiper d'une grille de protection à cause de l'inertie de l'hélice, dangereuse en rotation.

L'objet de la présente invention est un exterminateur compact d'insectes volants ne présentant pas les inconvénients énumérés ci-dessus.

A cet effet, l'exterminateur compact d'insecte volants selon l'invention comporte une source ce lumière spécifique, des moyens d'aspiration et un réceptacle où les insectes capturés sont détruits par dessiccation, dans lequel seule une très faible partie de l'air brassé par l'aspirateur est utilisée pour ventiler le réceptacle à insectes captifs, ce qui permet l'emploi d'un aspirateur de très faible puissance ; d'où un exterminateur économique, compact, silencieux et sans aucun danger pour l'homme.

Selon une caractéristique de l'invention, les moyens d'aspiration comportent un tunnel d'aspiration formé par un premier carénage circulaire, un tunnel de dépression formé par un second carénage circulaire ouvert sur une partie de sa circonférence et un moteur entrainant une hélice de diamètre légèrement inférieur au diamètre intérieur du premier carénage, la face postérieure du tunnel de dépression étant obturée par un grillage.

Selon une autre caractéristique de l'invention le trajet du flux d'air principal et le trajet des insectes sont séparés avant la capture des insectes par le fait d'une ouverture munie d'une grille, située dans l'axe de l'hélice, ceci afin de permettre un fonctionnement silencieux en évitant le passage de l'air à travers la zone de stockage et de destruction des insectes et d'utiliser en conséquence un moteur de faible puissance.

Selon une autre caractéristique de l'invention, l'hélice des moyens d'aspiration comporte un moyeu auquel sont assujettis au moins deux pales (avantageusement trois), au moins deux rateaux (avantageusement trois) pour balayer, en rotation, la surface totale du grillage, et une ogive réfléchissante.

Selon encore une autre caractéristique de l'invention, la source de lumière est un tube circulaire, est avantageusement constituée par un tube fluorescent de diamètre intérieur sensiblement inférieur à celui du premier carénage et est disposée sur la face antérieure dudit premier carénage.

D'autres caractéristiques et avantages de la présente invention apparaitront mieux à la lecture de la description qui va suivre, faite en relation avec les dessins annexés sur lesquels :

la figure 1 est une vue en perspective schématique partielle, comportant un arraché, d'un mode de réalisation de l'exterminateur d'insectes selon l'invention ; et

la figure 2 est une vue en coupe schématique selon la ligne 5-5 de l'exterminateur représenté sur la figure 1.

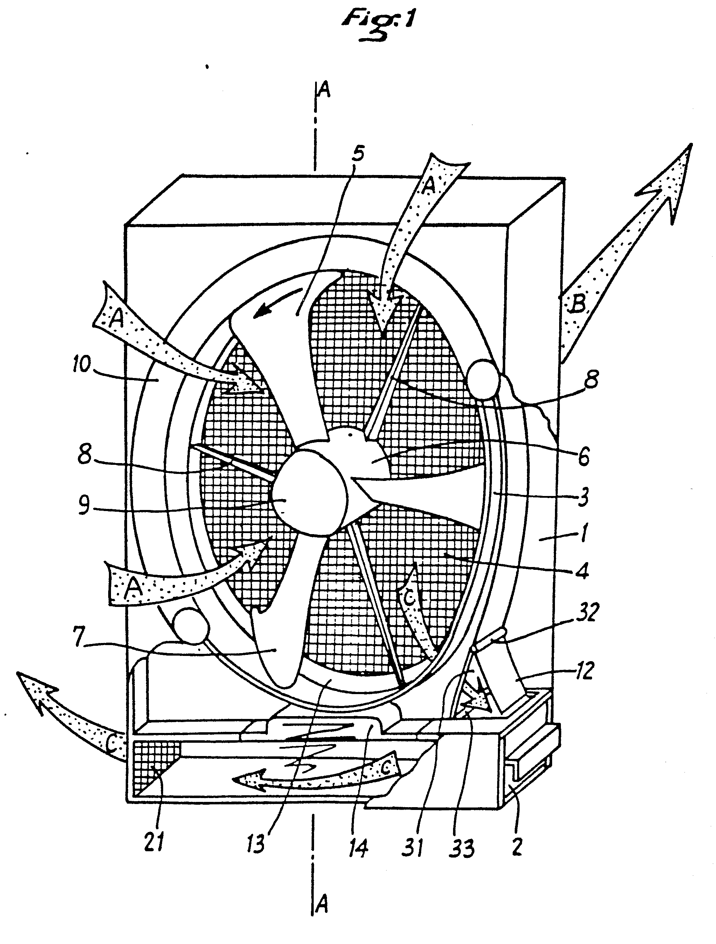

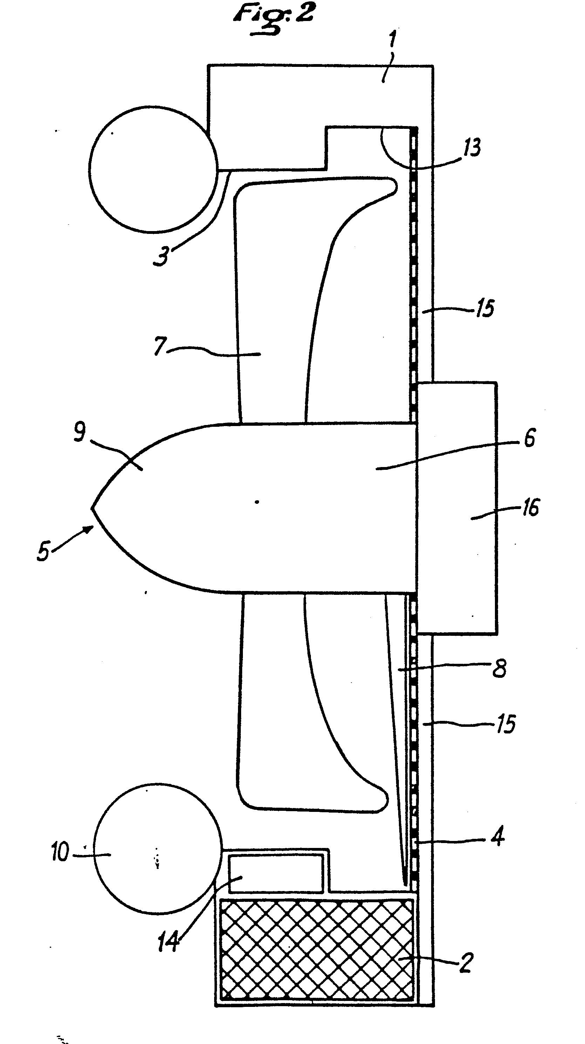

L'exterminateur d'insectes représenté sur les figures 1 et 2 comporte une carcasse abritant un bati superposé à un tiroir 2 et un dispositif d'allumage 14 pour tube fluorescent ou analogue. Le bati 1 comprend un premier carénage 3 pratiquement circulaire formant un tunnel d'aspiration et un second carénage circulaire 13 formant un tunnel de dépression, interrompu à son extrémité inférieure par une ouverture 31 au niveau de l'avant du tiroir 2. Le bati 1 comprend en outre un disque de grillage 4 de meme diamètre que la partie circulaire du second carénage 13, et lui étant fixé à sa périphérie. Le grillage 4 est également fixé à des moyens de support 15, eux-memes assujettis au second carénage 13 et destiné à maintenir au centre dudit second carénage le moteur électrique 16 entrainant en rotation l'hélice 5 de l'aspirateur. L'hélice 5, qui est une hélice spéciale monobloc à un double effet axial et centrifuge, comporte un moyeu 6 auquel sont fixées trois pales 7 et, disposés entre lesdites pales au ras du grillage 4 trois rateaux 8 balayant, en rotation, la surface totale dudit grillage. Le moyeu 6 porte également une ogive 9 réfléchissante. Par la face antérieure du premier carénage 3, dont le diamètre intérieur est légèrement supérieur à celui de l'hélice 5, est disposée une source lumineuse ayant la forme d'une couronne, avantageusement un tube fluorescent actinique 10 circulaire, éventuellement à lumière noire. Avantageusement, le diamètre de la circonférence intérieure du tore que constitue le tube fluorescent 10 est sensiblement inférieur au diamètre intérieur du premier carénage 3, de sorte que ledit tube fluorescent forme un épaulement arrondi, dirigé vers l'intérieur, à la surface intérieure dudit premier carénage. A l'arete supérieure 32 de l'ouverture 31 du second carénage 13, laquelle arete est située sensiblement à l'aplomb de l'arete inférieure 33 de ladite ouverture, est articulé un clapet 12 de façon que, lorsque l'aspirateur n'est pas sous tension, le bord inférieur du clapet 12 se plaque, par gravite, contre l'arete 33 et que, lorsque l'aspirateur fonctionne, le clapet 12, sous la poussée de l'air brassé, n'obture plus l'ouverture 31.

La seule particularité du tiroir 2 est que son fond 21 est grillagé.

Lorsque l'exterminateur d'insectes volants selon

l. invention est sous tension, le tube fluorescent 10 émet de la lumière que l'ogive 9 réfléchit, ce qui à pour effet d'attirer les insectes. Simultanément, l'hélice 5 tourne et aspire l'air (flèches A) dans une zone circulaire située sur la surface antérieure du premier carénage 3. Cette aspiration est favorisée par l'ogive 9 ainsi que par le rebord que le tube fluorescent 10 constitue à la surface inférieure du premier carénage 3. Une grande partie de l'air aspiré (flèche B) est refoulée au niveau de la face postérieure du second carénage 13 tandis que le reste de l'air aspiré (flèche C) ouvre le clapet 12, circule dans le tiroir 2 et s'échappe par le fond 21 dudit tiroir. Les insectes attirés par la lumière sont aspirés dans un premier temps, puis chassés par l'hélice 5 dans le tiroir 12 où ils vont mourir par dessiccation. Pour hater cette dessiccation, on peut placer dans la carcasse de l'exterminateur d'insectes selon l'invention, en particulier dans le tiroir 2, des moyens de chauffage, avantageusement le dispositif d'allumage 14 du tube fluorescent. Au cas où un insecte particulièrement résistant tenterait de s'échapper du tiroir en passant par le clapet 12 à contre-courant et en s'agrippant au grillage 4, les rateaux 8 l'en décrocheraient et il serait immédiatement rejetés dans le tiroir 2.

REVENDICATIONS

1 - Exterminateur compact d'insectes volants comportant une source lumineuse spécifique pour les attirer, des moyens d'aspiration pour les capturer et un réceptacle clos pour les y stocker, l'extermination desdits insectes se produisant par dessiccation, caractérisé en ce que seule une très faible partie de l'air aspiré est utilisée pour deshydrater efficacement les insectes.

2 - Exterminateur d'insectes volants selon la revendication 1, caractérisé en ce que les moyens d'aspiration comportent un tunnel d'aspiration formé par un premier carénage 3 circulaire, un tunnel de dépression formé par un second carénage (13) circulaire ouvert sur une partie (31) de sa circonférence et un aspirateur comprenant un moteur (160 entrainant une hélice (5) de diamètre légèrement inférieur au diamètre intérieur du premier carénage (3), le second carénage (3) circulaire et étant obturé sur sa face postérieure par un grillage (4).

3 - Exterminateur d'insectes volants selon la revendication 2, caractérisé en ce que le moteur (16) des moyens d'aspiration pour la capture des insectes est de très faible inertie de puissance, ce qui confère comme avantage audit exterminateur, outre de ne consommer qu'une quantité d'énergie négligeable, de ne présenter aucun danger de blessure et de ne pas nécessiter de grille de protection.

4 - Exterminateur d'insectes volants selon la revendication 2 ou 3, caractérisé en ce que l'hélice (5) spéciale monobloc a un double effet axial et centrifuge et comporte, outre un moyeu (6), au moins deux pales (7) assurant l'aspiration de l'air entrainant les insectes, et au moins deux rateaux (8) solidaires du moyeu (6) qui balayent en rotation la surface totale du grillage (4), ceci dans le triple but d'ejecter latéralement les insectes dans le tiroir de stockage (2), d'empecher les insectes de se fixer ou se déplacer à pattes sur le grillage (4) et d'actionner par effet de surpression le clapet anti-retour (12) qui obture automatiquement par gravité l'ouverture (31) dès l'arret de l'aspirateur, empechant ainsi les éventuels insectes encore vivants de ressortir du tiroir de stockage(2).

5 - Exterminateur d'insectes volants selon une des revendications 2 à 4, caractérisé en ce que le moyeu (6) de l'hélice comporte en amont des pales (7) une ogive (9) profilée et réfléchissante enfonçant ainsi l'action attractive de la lampe circulaire tout en améliorant l'écoulement aérollique des insectes dans le tunnel d'aspiration (3).

6 - Exterminateur d'insectes volants selon une des revendications précédentes, caractérisé en ce que la source lumineuse (10) a la forme d'une couronne, est concentrique au tunnel d'aspiration et est disposée sur la face antérieure du premier carénage (3), le diamètre intérieur de ladite source lumineuse étant sensiblement inférieur au diamètre intérieur dudit premier carénage (3), cette dernière particularité ayant pour but d'éviter les turbulences d'air en créant un flux laminaire à la périphérie du tunnel d'aspiration et par le fait d'éviter le rejet intempestif des insectes.

7 - Exterminateur d'insectes volants selon une des revendications précédentes caractérisé en ce que la source lumineuse est un tube fluorescent (10) actinique ou à lumière noire de wood dont le spectre est compris entre 3000 et 4000 angstrom.

8 - Exterminateur d'insectes volants selon une des revendications précédentes où le réceptacle pour stocker les insectes est un tiroir (2) dont le fond (21) est grillagé, caractérisé en ce que l'ouverture (31) communique avec ledit tiroir par l'intermédiaire du clapet (12) lorsque l'hélice (5) est entrainée par le moteur (16).

9 - Exterminateur d'insectes volants selon la revendication 7, où le réceptacle pour stocker les insectes est un tiroir (2), caractérisé en ce que le dispositif d'allumage (14) du tube fluorescent (10) est logé dans ledit tiroir et en ce que la dessiccation des insectes est hâtée par la chaleur dissipée par ledit dispositif d'allumage.

10 - Exterminateur d'insectes selon une des revendications précédentes caractérisée en ce que la majeure partie du flux d'air brassé par l'hélice est rejetée au travers d'une ouverture se trouvant dans l'axe de l'hélice.

11 - Exterminateur d'insecte selon des revendications précédentes caractérisée en ce que les insectes sont évacués en dehors du flux d'air principal par un flux d'air d'importance moindre et de direction différente que ledit flux d'air principal.

Fig.1

Fig. 2